# EUROPÄISCHE PATENTANMELDUNG

(11) **EP 4 737 942 A1**
(43) Veröffentlichungstag der Anmeldung: **06.05.2026**
(21) Anmeldenummer: 25208213.6
(22) Anmeldetag: 13.10.2025
(51) Int. Cl.: G01S 7/48, G01S 7/481, G01S 7/499, G01S 17/08, G01S 17/10, G01S 17/36, G01S 17/48, G01S 17/88

(54) **OPTOELEKTRONISCHER SENSOR ZUM ERFASSEN VON OBJEKTEN**

(30) Priorität: 29.10.2024 DE 102024131467
(71) Anmelder: SICK AG, 79183 Waldkirch (DE)
(72) Erfinder: Wolf, Richard, 79194 Gundelfingen (DE); Baldischweiler, Boris, 79276 Reute (DE)
(74) Vertreter: Manitz Finsterwald Patent- und Rechtsanwaltspartnerschaft mbB

(57) **Zusammenfassung**

Optoelektronischer Sensor (100) zum Erfassen von Objekten in einem Überwachungsbereich (12), mit einer Sendeanordnung (20) zum Aussenden von Sendelichtsignalen entlang eines Sendelichtpfads in den Überwachungsbereich und mit einer Empfangsanordnung (30), umfassend einen Lichtempfänger, welcher zum Detektieren von Empfangslichtsignalen eingerichtet ist, die von einem im Überwachungsbereich anwesenden Objekt durch Remission auftreffender Sendelichtsignale erzeugt werden und sich zwischen dem Objekt und dem Lichtempfänger entlang eines Empfangslichtpfads ausbreiten. Es ist vorgesehen, dass die Empfangsanordnung ein dem Lichtempfänger vorgeordnetes Umlenkelement (40) mit zumindest einer Reflexionsfläche (42) aufweist, welche derart ausgestaltet und ausgerichtet ist, dass der Empfangslichtpfad durch Reflexion der Empfangslichtsignale an der zumindest einen Reflexionsfläche umgelenkt wird, wobei die Empfangslichtsignale bei der Reflexion zumindest teilweise polarisiert werden.

## Beschreibung

Die vorliegende Erfindung betrifft einen optoelektronischen Sensor zum Erfassen von Objekten in einem Überwachungsbereich, mit einer Sendeanordnung zum Aussenden von Sendelichtsignalen entlang eines Sendelichtpfads in den Überwachungsbereich und mit einer Empfangsanordnung, umfassend einen Lichtempfänger, welcher zum Detektieren von Empfangslichtsignalen eingerichtet ist, die von einem im Überwachungsbereich anwesenden Objekt durch Remission auftreffender Sendelichtsignale erzeugt werden und sich zwischen dem Objekt und dem Lichtempfänger entlang eines Empfangslichtpfads ausbreiten.

Die Sendelichtsignale können in Form eines Sendelichtbündels als Lichtpulse oder kontinuierliche Lichtsignale ausgesendet werden. Treffen die Sendelichtsignale bzw. das Sendelichtbündel auf ein Objekt, wird zumindest ein Teil des auftreffenden Sendelichts in Richtung der Empfangsanordnung remittiert, wobei die Remission in Abhängigkeit von der Oberflächenbeschaffenheit des erfassten Objekts spiegelnd reflektierend, d.h. gerichtet, oder diffus gestreut, d.h. ungerichtet, erfolgt. Außerdem kann es möglich sein, dass das remittierte Licht spiegelnd reflektierte und diffus gestreute Anteile umfasst. Diese remittierten Sendelichtsignale werden als Empfangslichtsignale von dem Lichtempfänger der Empfangsanordnung erfasst und in entsprechende elektrische Empfangssignale umgewandelt. Der Lichtempfänger kann mit einer Auswerteeinheit verbunden sein, welche die elektrischen Empfangssignale weiterverarbeitet und gegebenenfalls ein Objekterfassungssignal ausgeben kann.

Als Lichtempfänger können beispielsweise Fotodioden, Avalanche-Fotodioden, Fotodiodenzeilen, SPAD-Arrays (SPAD: abgekürzt für Englisch "Single Photon Avalanche Diode"), CMOS-Arrays oder dergleichen eingesetzt werden. Die Sendeanordnung umfasst eine Lichtquelle, wobei als Lichtquellen unter anderem LEDs, Laser, Laserdioden oder VCSEL (abgekürzt für Englisch "Vertical Cavity Surface Emitting Laser", eine Bauform eines Oberflächenemitters) eingesetzt werden können. Sowohl die Sendeanordnung als auch die Empfangsanordnung können ein oder mehrere Optiken aufweisen, welche die Sende- bzw. Empfangslichtsignale fokussieren oder bündeln. Die Wellenlänge des Sendelichts kann sowohl im sichtbaren als auch im nicht sichtbaren Bereich, beispielsweise im Infrarotbereich, liegen.

Der optoelektronische Sensor kann insbesondere als ein entfernungsmessender optoelektronischer Sensor ausgestaltet sein, welcher dazu eingerichtet ist, zusätzlich die Entfernung eines erfassten Objekts von dem optoelektronischen Sensor zu ermitteln. Eine derartige Entfernungsmessung kann beispielsweise in Abhängigkeit von der Lichtlaufzeit der ausgesendeten und empfangenen Lichtsignale erfolgen. Eine lichtlaufzeitbasierte Entfernungsmessung wird auch als TOF-Messung (von Englisch "Time Of Flight") bezeichnet. Vorzugsweise werden die Sendelichtsignale dabei in Form von kurzen Lichtpulsen ausgesendet und die Lichtlaufzeit auf der Grundlage der Zeitdifferenz zwischen einem Sendelichtpuls und einem zugeordneten Empfangslichtpuls ermittelt. Grundsätzlich ist jedoch auch eine Lichtlaufzeitmessung nach dem Phasenmessprinzip möglich, bei welchem moduliertes Sendelicht ausgesendet und die Lichtlaufzeit auf der Grundlage einer Phasenverschiebung zwischen dem Sendelicht und dem Empfangslicht ermittelt wird.

Bei beiden Entfernungsmessprinzipien kann vorgesehen sein, dass die Auswerteeinheit für die Durchführung einer TOF-Messung zusätzlich mit einer Lichtquelle der Sendeanordnung verbunden ist, um z.B. diese für eine exakte Bestimmung der Lichtlaufzeit anzusteuern oder ein Synchronisationssignal von der Lichtquelle zu empfangen, welches einen Aussendezeitpunkt bzw. die Phasenlage der Sendelichtsignale repräsentiert.

Bevorzugt bezieht sich die vorliegende Erfindung auf einen optoelektronischen Sensor, bei dem die Sendeanordnung und die Empfangsanordnung eine sogenannte Koaxialanordnung bilden. Bei einer solchen Koaxialanordnung fallen der Sendelichtpfad und der Empfangslichtpfad zumindest abschnittsweise, insbesondere im Überwachungsbereich, zusammen.

Die vorliegende Erfindung kann jedoch auch einen optoelektronischen Sensor in Biaxialanordnung betreffen. Hierbei verlaufen der Sendelichtpfad und der Empfangslichtpfad beabstandet zueinander, entweder parallel oder unter einem gewissen Divergenzwinkel. Bei optoelektronischen Sensoren in Biaxialanordnung kann eine Entfernungsmessung alternativ auch nach dem Triangulationsprinzip erfolgen. Bei einem derartigen Triangulationssensor ändert sich die Position eines Empfangslichtflecks, welcher von einer Empfangsoptik der Empfangsanordnung durch Abbilden des remittierten Lichts auf einem ortsauflösenden Lichtempfänger erzeugt wird, in Abhängigkeit von der Entfernung zwischen dem optoelektronischen Sensor und einem erfassten Objekt in einer Triangulationsrichtung. Zwischen dem Auftreffort des Empfangslichtflecks auf dem Lichtempfänger und der Entfernung des erfassten Objekts besteht hierbei ein eindeutiger geometrischer Zusammenhang. Durch Auswertung der Lichtverteilung auf dem Lichtempfänger, die z.B. von fotosensitiven Elementen eines Zeilensensors, die entlang der Triangulationsrichtung in einer Zeile nebeneinander aufgereiht sind, erfasst werden kann, kann der Abstand zwischen dem Sensor und dem Objekt ermittelt werden oder es kann festgestellt werden, ob sich ein erfasstes Objekt in einem vorgegebenen Abstand zum Sensor befindet oder nicht.

Unabhängig von dem ggf. verwendeten Entfernungsmessprinzip besteht bei der Konzeption von gattungsgemäßen optoelektronischen Sensoren eine Herausforderung darin, eine zuverlässige Detektion von Objekten mit unterschiedlichen Oberflächeneigenschaften zu gewährleisten. Bei Objekten mit sehr dunkler Oberfläche oder bei transparenten Objekten weisen die Empfangslichtsignale nur eine sehr geringe Lichtintensität auf. Demgegenüber können helle Objekte oder Objekte mit spiegelnder Oberfläche Empfangslichtsignale mit einer sehr hohen Lichtintensität erzeugen. Daher kann es sein, dass der Dynamikbereich der Empfangslichtsignale, d.h. der Bereich zwischen minimaler und maximaler zu erwartender Lichtintensität der Empfangslichtsignale, sehr groß sein muss. Empfindliche optoelektronische Sensoren, die darauf ausgelegt sind, Objekte mit einem geringen Remissionsgrad zu erfassen, können von Objekten mit einem hohen Remissionsgrad gestört werden. Bei optoelektronischen Sensoren mit mehreren räumlich benachbarten Erfassungskanälen können stark remittierende Objekte zudem zu fehlerhaften Erfassungen aufgrund von Kanalübersprechen führen.

Ein bekannter Ansatz, Störungen durch spiegelnde Reflexionen an erfassten Objekten zu vermeiden oder zumindest zu reduzieren, besteht darin, Polarisationseffekte auszunutzen, welche bei einer Reflexion an einer glänzenden, spiegelnden oder metallischen Oberfläche die remittierten Empfangslichtsignale in bestimmter Weise beeinflussen. Durch den Einsatz geeignet orientierter Polarisatoren oder Polarisationsfilter im Sende- und/oder Empfangslichtpfad bzw. durch die Verwendung von polarisiertem Sendelicht, wie es beispielsweise von Lasern erzeugt wird, können derartige, auch als Glanzreflexionen bezeichnete unerwünschte spiegelnde Remissionen unterdrückt werden und gegebenenfalls auch störendes, von externen Lichtquellen stammendes Fremdlicht durch die Ausnutzung der Polarisationseffekte zumindest teilweise aus dem Empfangslicht herausgefiltert werden. Empfangslichtsignale, welche durch ungerichtete bzw. diffuse Remission an dunklen oder matten Objekten zurückgestreut werden, werden zumindest nicht signifikant gedämpft. Dadurch kann der vom Lichtempfänger zu verarbeitende Dynamikbereich reduziert werden und Störungen durch ein Übersteuern des Lichtempfängers vermieden werden. Durch die Unterdrückung von Fremdlicht kann die Störsicherheit des Sensors erhöht werden.

Durch die benötigten Polarisatoren steigen jedoch die Herstellungskosten.

Es ist die Aufgabe der Erfindung, einen optoelektronischen Sensor der eingangs genannten Art zu schaffen, welcher unempfindlich gegenüber auf Glanzreflexionen beruhenden Empfangslichtsignalen ist und kostengünstig herzustellen ist.

Die Lösung der Aufgabe erfolgt durch einen optoelektronischen Sensor mit den Merkmalen des Anspruchs 1. Erfindungsgemäß ist vorgesehen, dass die Empfangsanordnung zumindest ein dem Lichtempfänger vorgeordnetes Umlenkelement mit zumindest einer Reflexionsfläche aufweist, welche derart ausgestaltet und ausgerichtet ist, dass der Empfangslichtpfad durch Reflexion der Empfangslichtsignale an der zumindest einen Reflexionsfläche umgelenkt wird, wobei die Empfangslichtsignale bei der Reflexion zumindest teilweise polarisiert werden. Es wird ausgenutzt, dass von einem Lichtbündel, welches schräg auf die Grenzfläche zweier dielektrischer Medien einfällt, die senkrecht zur Einfallsebene polarisierten Anteile (bezogen auf die elektrische Feldkomponente) zu einem größeren Teil reflektiert werden als die parallel zur Einfallsebene polarisierten Anteile. Die nicht reflektierten, parallel zur Einfallsebene polarisierten Anteile treten in die Reflexionsfläche ein und werden dort gebrochen. Bei der Reflexionsfläche im Sinne der vorliegenden Offenbarung handelt es sich nicht notwendigerweise um eine Fläche im streng mathematischen Sinn, sondern kann auch als eine Reflexionsschicht mit einer bestimmten Schichtdicke betrachtet werden. Die Reflexionsfläche ist bevorzugt aus einem dielektrischen Medium hergestellt und bevorzugt plan.

Mittels der Reflexionsfläche kann erreicht werden, dass Empfangslichtsignale, die aufgrund von spiegelnder Reflexionen polarisierten Sendelichts am remittierenden Objekt zumindest zu einem Großteil einen definierten Polarisationszustand haben, so auf die Reflexionsfläche treffen, dass Polarisationskomponenten, die parallel zur Einfallsebene verlaufen und damit nicht oder nur zu einem geringen Teil an der Reflexionsfläche reflektiert werden, beziehungsweise in diese eintreten und dort durch Absorption, gegebenenfalls mit Hilfe von zusätzlichen Absorptionsschichten, unterdrückt werden. Diejenigen Empfangslichtanteile, die aufgrund ungerichteter Remission am remittierenden Objekt unpolarisiert sind, werden zumindest zum überwiegenden Teil reflektiert und werden insofern weniger stark beeinträchtigt. Hierbei ist zu berücksichtigen, dass unter unpolarisiertem Licht im physikalischen Sinn eine Überlagerung einer Vielzahl von polarisierten Lichtwellen zu verstehen ist, welche unterschiedliche Polarisationsrichtungen aufweisen, wobei die Winkelverteilung dieser Polarisationsrichtungen zumindest annähernd einer Gleichverteilung entspricht.

Durch die Unterdrückung der Glanzreflexe wird auch der notwendige Dynamikbereich vorteilhaft verkleinert.

Die Erfindung zeichnet sich dadurch aus, dass ein Umlenkelement, welches bei sehr vielen Bauformen von optoelektronischen Sensoren ohnehin vorhanden ist, zugleich als Polarisator zur Unterdrückung von Glanzreflexionen eingesetzt wird. Insbesondere bei der Verwendung von Sendelicht im Infrarotbereich lässt sich hierdurch ein erheblicher Kostenvorteil erzielen, da Polarisatoren, welche auch im Infrarotbereich wirksam sind, im Vergleich zu Polarisatoren für den sichtbaren Spektralbereich um ein Vielfaches teurer sind.

Gemäß einer bevorzugten Ausführungsform ist das Umlenkelement derart ausgestaltet und ausgerichtet, dass der Einfallswinkel des Empfangslichtpfads auf die zumindest eine Reflexionsfläche zumindest im Wesentlichen gleich dem Brewster-Winkel der Reflexionsfläche ist. Unter dem Einfallswinkel des Empfangslichtpfads wird der Winkel verstanden, unter welchem die sich entlang des Empfangslichtpfads ausbreitenden Empfangslichtsignale auf die Reflexionsfläche treffen. Der Brewster-Winkel gibt den Winkel an, bei dem von Licht, das auf die Grenzfläche zweier dielektrischer Medien einfällt (im vorliegenden Fall die Grenzfläche zwischen der Reflexionsfläche und der umgebenden Luft, nur die senkrecht zur Einfallsebene polarisierten Anteile (bezogen auf die elektrische Feldkomponente) reflektiert werden. Der Einfallswinkel und entsprechend der Brewster-Winkel beziehen sich auf den Winkel, der zwischen der Flächennormalen der Reflexionsfläche und dem Empfangslichtpfad eingeschlossen ist. Durch die polarisationsrichtungsselektive Reflexion wird das reflektierte Licht im Endeffekt linear polarisiert. Die parallel zur Einfallsebene polarisierten Lichtanteile treten durch die Grenzfläche hindurch in die Reflexionsfläche ein und werden dabei gebrochen sowie in Abhängigkeit vom Material der Reflexionsfläche dort auch absorbiert. Das Merkmal, wonach der Einfallswinkel "im Wesentlichen" gleich dem Brewster-Winkel ist, ist hierbei so zu verstehen, dass eine Winkeldifferenz zwischen dem Einfallswinkel und dem Brewster-Winkel klein ist und bevorzugt nicht größer als 20°, bevorzugt nicht größer als 10°, weiter bevorzugt nicht größer als 5° und besonders bevorzugt nicht größer als 2° ist. Bei derartigen geringfügigen Winkelabweichungen wird der parallel zur Einfallsebene polarisierte Anteil des Lichts noch hinreichend stark unterdrückt.

Gemäß einer weiteren vorteilhaften Ausführungsform sind die Sendelichtsignale linear oder zirkular polarisiert. Eine lineare Polarisation wird oftmals bereits durch die Auswahl einer geeigneten Lichtquelle zur Erzeugung der Sendelichtsignale erreicht. Bei vielen Arten von Lasern ist das emittierte Licht zum Beispiel bereits linear polarisiert. Ansonsten kann der Lichtquelle ein entsprechender Polarisationsfilter nachgeordnet werden. Eine zirkulare Polarisation des Sendelichts kann dadurch erreicht werden, dass das linear polarisierte Sendelicht zusätzlich noch durch eine Verzögerungsplatte, insbesondere eine λ/4-Platte geleitet wird. Bevorzugt ist die Sendeanordnung bezüglich der Raumlage der Polarisationsrichtung justierbar, d.h. die Polarisationsebene kann gedreht werden, beispielsweise durch ein Drehen der Sendeachse der Lichtquelle oder eines vorgeordneten Linearpolarisators um die Achse des Sendelichtpfads.

Gemäß einer weiteren vorteilhaften Ausführungsform kann die Polarisation der Sendelichtsignale auch durch ein im Sendelichtpfad angeordnetes Umlenkelement erzeugt werden, welches zumindest eine Reflexionsfläche aufweist, welche derart ausgestaltet und ausgerichtet ist, dass der Sendelichtpfad durch Reflexion der Sendelichtsignale an der zumindest einen Reflexionsfläche umgelenkt wird, wobei die Sendelichtsignale bei der Reflexion zumindest teilweise polarisiert werden. Die Polarisation der Sendelichtsignale erfolgt somit in analoger Weise zur Polarisation der Empfangslichtsignale.

Gemäß einer bevorzugten Ausführungsform sind die Polarisationsrichtung der Sendelichtsignale und eine Einfallsebene der Empfangslichtsignale auf der zumindest einen Reflexionsfläche derart zueinander ausgerichtet, dass diejenigen Anteile der Empfangslichtsignale, die auf eine spiegelnde Reflexion der Sendelichtsignale an einem Objekt zurückgehen, zumindest zu einem Großteil an der zumindest einen Reflexionsfläche nicht reflektiert werden und bevorzugt von der zumindest einen Reflexionsfläche absorbiert werden. Sofern der nicht reflektierte Lichtanteil nicht oder nicht ausreichend in der Reflexionsfläche absorbiert wird, kann zusätzlich eine Absorptionsschicht auf der Rückseite der Reflexionsfläche angeordnet werden. Hierdurch wird verhindert, dass der nicht reflektierte Anteil des Empfangslichts indirekt doch noch auf den Lichtempfänger trifft.

Gemäß einer bevorzugten Ausführungsform ist zumindest in dem Empfangslichtpfad, bevorzugt zusätzlich im Sendelichtpfad, eine Verzögerungsplatte, bevorzugt eine λ/4-Platte, vorgesehen. Wie bereits vorstehend erwähnt wurde, kann durch eine λ/4-Platte im Sendelichtpfad zirkular polarisiertes Licht erzeugt werden. Bei einer spiegelnden Reflexion an stark glänzenden oder metallischen Objektoberflächen wird die Drehrichtung des zirkular polarisierten Lichts umgedreht. Durch die im Empfangslichtpfad vorgesehene Verzögerungsplatte wird das zirkular polarisierte Licht in linear polarisiertes Licht zurückverwandelt. Wenn sowohl im Empfangslichtpfad als auch im Sendelichtpfad eine Verzögerungsplatte angeordnet sein soll, können diese Verzögerungsplatten auch durch eine einzige gemeinsame Verzögerungsplatte gebildet sein, bevorzugt in einem Koaxialbereich, in dem der Sendelichtpfad und der Empfangslichtpfad koaxial zueinander verlaufen.

Bei einer alternativen Ausführungsform, bei der keine Verzögerungsplatten im Sende- oder Empfangslichtpfad eingesetzt werden, wird ausgenutzt, das bei einer Glanzreflexion von linear polarisiertem Licht die Polarisationsrichtung erhalten bleibt, während das remittierte Empfangslicht nach einer diffusen Reflexion mehr oder weniger unpolarisiert ist. Hierfür stehen die Polarisationsrichtungen des Sendelichts und des Empfangslichts (hinter dem Umlenkelement) bevorzugt senkrecht zueinander.

Durch eine geeignete Ausrichtung der polarisationsbeeinflussenden Komponenten des optoelektronischen Sensors kann erreicht werden, dass diejenige Komponente des Empfangslichts, welche auf eine solche Glanzreflexion zurückzuführen ist, parallel zur Einfallsebene des Empfangslichtpfads auf die Reflexionsfläche polarisiert ist und dementsprechend nicht reflektiert, sondern absorbiert wird.

Gemäß einer weiteren bevorzugten Ausführungsform ist die zumindest eine Reflexionsfläche aus Silizium, bevorzugt aus kristallinem Silizium, besonders bevorzugt aus einem Siliziumwafer hergestellt. Es hat sich gezeigt, dass für eine effektive Unterdrückung des auf Glanzreflexionen beruhenden Anteils des Empfangslichts der Quotient Rₛ/Rₚ möglichst groß sein sollte, wobei Rₛ der Reflexionskoeffizient für senkrecht zur Einfallsebene polarisiertes Licht und Rₚ der Reflexionskoeffizient für parallel zur Einfallsebene polarisiertes Licht ist. In der Regel nimmt der Reflexionskoeffizient Rₛ mit größer werdendem Einfallswinkel zu, während der Reflexionskoeffizient Rₚ im Brewster-Winkel ein Minimum aufweist. Der Brewster-Winkel hängt vom Quotienten der Brechungsindizes der beteiligten dielektrischen Medien ab. Da das erste Medium in der Regel Luft ist, ist es wünschenswert, dass der Brechungsindex der Reflexionsfläche als zweites Medium möglichst hoch ist, da sich der Brewster-Winkel mit zunehmendem Brechungsindex der Reflexionsfläche zu größeren Einfallswinkeln hin verschiebt. Je größer der Brewster-Winkel ist, desto höher ist auch der Reflexionskoeffizient Rₛ. Dadurch werden Verluste bei der Reflexion des eigentlich erwünschten, senkrecht zur Einfallsebene polarisierten Lichtanteils reduziert. Grundsätzlich sollte jedoch der Kostenfaktor bei der Auswahl eines geeigneten Mediums für die Reflexionsfläche nicht vernachlässigt werden. Dieser steigt in der Regel mit zunehmendem Brechungsindex.

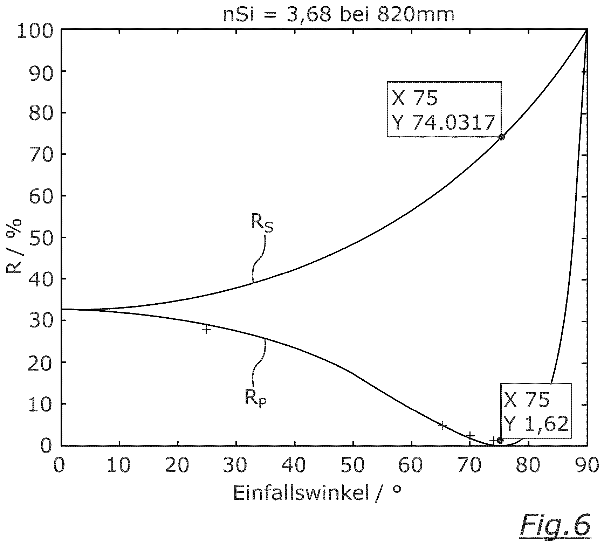

Es hat sich gezeigt, dass Silizium besonders geeignet ist, da dessen Brechungsindex n_{Si} von 3,68 bei einer Lichtwellenlänge von 820 nm im Vergleich z.B. mit hochbrechenden Spezialgläsern hoch und Silizium dennoch kostengünstig ist. In Fig. 6 ist ein Diagramm dargestellt, in dem die beiden Kurven die Reflexionskoeffizienten Rₛ und Rₚ von Silizium jeweils in Abhängigkeit vom Einfallswinkel darstellen. Der Brewster-Winkel für Silizium liegt bei ca. 75°, wobei für diesen Winkel der Reflexionskoeffizient Rₛ für das reflektierte Empfangslicht bei 74% und der Reflexionskoeffizient Rₚ für das absorbierte Empfangslicht bei 1,6% liegen. Daraus errechnet sich eine Unterdrückung der Glanzreflexionen um einen Faktor 46.

Ein weiterer Vorteil des vergleichsweise hohen Brewster-Winkels von Silizium besteht darin, dass der hierzu komplementäre Winkel zwischen der Reflexionsfläche und dem Empfangslichtpfad mit ca. 15° vergleichsweise klein ist. Daher beträgt die Umlenkung des Empfangslichtpfads bei einer Reflexion an nur einer Reflexionsfläche ca. 30°. Sollen der Sendelichtpfad und der Empfangslichtpfad koaxial oder kollinear zueinander ausgerichtet sein, ergeben sich durch diese vergleichsweise kleine Ablenkung konstruktive Vorteile. So können beispielsweise der Lichtempfänger der Empfangsanordnung und eine Lichtquelle der Sendeanordnung auf einer gemeinsamen Leiterkarte angeordnet sein. Hierbei fällt das Empfangslicht zwar nicht senkrecht auf den Lichtempfänger, der Einfallswinkel von 30° kann jedoch noch toleriert werden. Dies wird nachfolgend noch näher anhand eines Ausführungsbeispiels erläutert.

Gemäß einer weiteren bevorzugten Ausführungsform weist die zumindest eine Reflexionsfläche einen Brechungsindex auf, welcher um mindestens das 1,5-fache, bevorzugt um mindestens das 2-fache größer ist als der Brechungsindex des an die Reflexionsfläche angrenzenden Mediums. Bei dem an die Reflexionsfläche angrenzenden Medium handelt es sich in der Regel um Luft, so dass somit die Reflexionsfläche einen (gerundeten) Brechungsindex von mindestens 1,5, bevorzugt von mindestens 2,0 aufweisen soll. Die genannten Werte für den Faktor bzw. den Brechungsindex gelten bevorzugt zumindest für einen Wellenlängenbereich zwischen 500 und 1000 nm.

Gemäß einer bevorzugten Ausführungsform weist das Umlenkelement wenigstens zwei, bevorzugt drei Reflexionsflächen auf, wobei der Empfangslichtpfad nacheinander an den zumindest zwei Reflexionsflächen umgelenkt wird. Die Reflexionsflächen sind bevorzugt nebeneinander angeordnet, d.h. sie grenzen aneinander an. Hierdurch ist es möglich, im Vergleich zu der vorstehend beschriebenen Ausgestaltung mit nur einer Reflexionsfläche auch größere Umlenkwinkel zu realisieren, wobei zugleich auch ein höherer Filterungsgrad für die Glanzreflexionen erreicht werden kann, da sich der Filterungsgrad mit der Anzahl der Reflexionsflächen entsprechend potenziert.

Gemäß einer weiteren bevorzugten Ausführungsform sind die Reflexionsflächen derart im Empfangslichtpfad angeordnet, dass der Empfangslichtpfad um einen Winkel von 90° umgelenkt wird, wobei bevorzugt die zumindest zwei Reflexionsflächen derart ausgerichtet sind, dass die Einfallswinkel für alle Reflexionsflächen gleich sind. Eine Umlenkung um 90° kann insbesondere mit einem Umlenkelement erzielt werden, welches drei Reflexionsflächen aus Silizium aufweist. Aufgrund des Brewster-Winkels von 75° wird der Empfangslichtpfad nacheinander jeweils um 30° umgelenkt, was sich zu der Gesamtumlenkung von 90° aufsummiert.

Gemäß einer weiteren bevorzugten Ausführungsform verlaufen der Sendelichtpfad und der Empfangslichtpfad zumindest im Überwachungsbereich koaxial zueinander. Diese koaxiale oder kollineare Ausrichtung der beiden Lichtpfade ist hier in qualitativer Weise zu verstehen. Ein geringfügiger, konstruktiv bedingter Versatz zwischen den beiden Lichtpfaden ist hinnehmbar.

Gemäß einer weiteren bevorzugten Ausführungsform ist in der zumindest einen Reflexionsfläche eine Öffnung vorgesehen, durch welche der Sendelichtpfad hindurch verläuft. Mittels einer derartigen Öffnung kann die koaxiale Ausrichtung von Sende- und Empfangslichtpfad verwirklicht werden. Alternativ ist es jedoch auch möglich, die Sendeanordnung möglichst nahe am Umlenkelement zu platzieren.

Gemäß einer weiteren bevorzugten Ausführungsform ist der Sensor als entfernungsmessender Sensor ausgebildet und dazu eingerichtet, die Entfernung eines erfassten Objekts von dem Sensor bevorzugt gemäß dem Triangulationsprinzip und/oder in Abhängigkeit von der Lichtlaufzeit der ausgesendeten und empfangenen Lichtsignale zu ermitteln.

Bei allen erfindungsgemäßen und bevorzugten Ausführungsformen des optoelektronischen Sensors ist es nicht zwingend notwendig, dass die Raumlage der Sende- und Empfangslichtpfade statisch ist. Der optoelektronische Sensor kann auch als ein scannendes System ausgestaltet sein, bei dem ein zweidimensionaler oder auch dreidimensionaler Überwachungsbereich abgetastet wird. Beispielsweise kann eine Kreisfläche oder eine Kegelfläche abgetastet werden, indem die Sende- und Empfangslichtpfade um eine Achse rotiert werden, beispielsweise durch Rotation des optoelektronischen Sensors einschließlich der Sende- und Empfangsanordnung. Alternativ können die Sende- und/oder Empfangsanordnung ortsfest sein, wobei die rotierende Abtastung durch Rotation des Umlenkelements erzielt wird. Weiterhin kann der optoelektronische Sensor auch mehrkanalig ausgebildet sein, wobei entsprechend der Kanalzahl mehrere Sendeanordnungen, Empfangsanordnungen und Umlenkeinheiten vorgesehen sein können.

Weitere Vorteile des erfindungsgemäßen optoelektronischen Sensors und vorteilhafte Ausgestaltungen ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird diese Merkmale zweckmäßigerweise auch einzeln betrachten und/oder zu sinnvollen weiteren Kombinationen zusammenfassen. Es zeigen:
- Fig. 1: eine schematische Querschnittsdarstellung eines optoelektronischen Sensors gemäß einem ersten Ausführungsbeispiel,
- Fig. 2: eine schematische Querschnittsdarstellung eines optoelektronischen Sensors gemäß einem zweiten Ausführungsbeispiel,
- Fig. 3: eine schematische Querschnittsdarstellung eines optoelektronischen Sensors gemäß einem dritten Ausführungsbeispiel,
- Fig. 4: eine schematische Querschnittsdarstellung eines optoelektronischen Sensors gemäß einem vierten Ausführungsbeispiel,
- Fig. 5: eine schematische Querschnittsdarstellung eines optoelektronischen Sensors gemäß einem fünften Ausführungsbeispiel, und
- Fig. 6: ein Diagramm, in welchem die Reflexionskoeffizienten für Silizium in Abhängigkeit vom Einfallswinkel für zwei unterschiedliche Polarisationsrichtungen dargestellt sind.

Im Folgenden sind gleiche oder gleichartige Elemente oder Komponenten mit den gleichen Bezugszeichen bezeichnet.

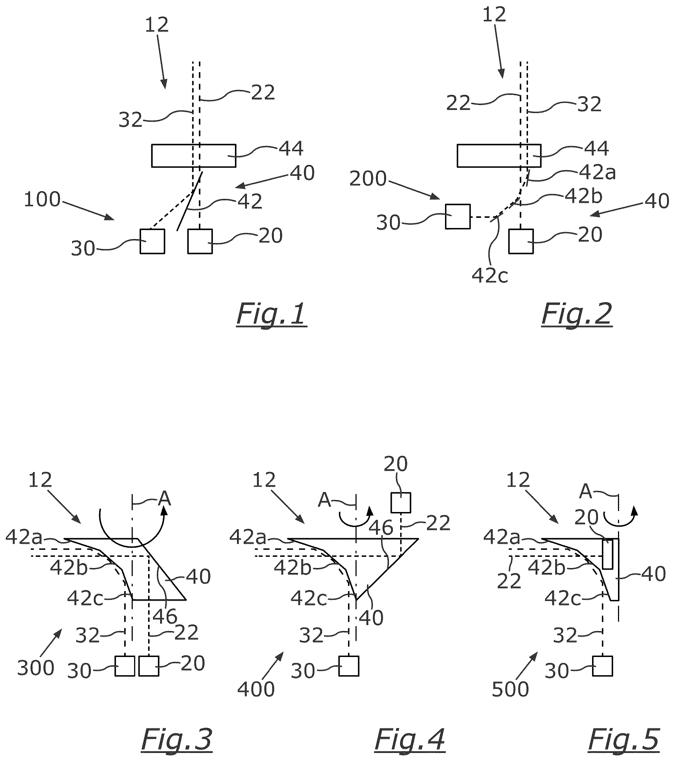

Fig. 1 zeigt einen optoelektronischen Sensor 100 gemäß einem ersten Ausführungsbeispiel, welcher zum Erfassen von Objekten (nicht dargestellt) in einem Überwachungsbereich 12 eingerichtet ist.

Der optoelektronische Sensor 100 umfasst eine Sendeanordnung 20 zum Aussenden von Sendelichtsignalen in den Überwachungsbereich 12 entlang eines Sendelichtpfads 22. Die hier nur schematisch dargestellte Sendeanordnung 20 kann eine Lichtquelle umfassen, welche beispielsweise als LED, Laser, Laserdiode oder VCSEL ausgebildet sein kann. Zusätzlich kann eine Sendeoptik zum Formen der Sendelichtsignale vorgesehen sein. Sofern die Lichtquelle nicht ohnehin bereits polarisiertes Sendelicht erzeugt, kann die Sendeanordnung 20 zusätzlich einen Linearpolarisator umfassen.

Der optoelektronische Sensor 100 umfasst weiterhin eine ebenfalls nur schematisch dargestellte Empfangsanordnung 30, welche einen Lichtempfänger und gegebenenfalls zusätzlich eine Empfangsoptik zum Formen von Empfangslichtsignalen umfassen kann.

Die Empfangslichtsignale werden von einem im Überwachungsbereich 12 anwesenden Objekt (nicht dargestellt) durch Remission, d.h. durch spiegelnde und/oder diffuse Reflexion, auftreffender Sendelichtsignale erzeugt und gelangen entlang eines Empfangslichtpfads 32 zur Empfangsanordnung 30.

Der optoelektronische Sensor 100 kann ferner eine Verzögerungsplatte 44 umfassen, wobei sowohl der Sendelichtpfad 22 als auch der Empfangslichtpfad 32 durch die Verzögerungsplatte 44 hindurch verlaufen. Die Verzögerungsplatte 44 ist vorzugsweise als eine λ/4-Platte ausgebildet. Durch die Verzögerungsplatte 44 wird das wie oben beschrieben linear polarisierte Sendelicht zirkular polarisiert. Entsprechend zirkular polarisiertes, remittiertes Empfangslicht, dessen Drehrichtung ggf. durch eine spiegelnde Reflexion an einer Objektoberfläche umgedreht sein kann, wird beim Durchtritt durch die Verzögerungsplatte 44 andererseits in linear polarisiertes Empfangslicht umgewandelt. Anstatt der gemeinsamen Verzögerungsplatte 44 kann im Sendelichtpfad 22 und im Empfangslichtpfad 32 jeweils eine separate Verzögerungsplatte vorgesehen sein.

Der optoelektronische Sensor 100 umfasst weiterhin ein Umlenkelement 40, welches eine einzige Reflexionsfläche 42 aufweist und zwischen der Sende- bzw. Empfangsanordnung 20, 30 und der Verzögerungsplatte 44 angeordnet ist. Die Reflexionsfläche 42 ist derart ausgestaltet und ausgerichtet, dass die Empfangslichtsignale im Brewster-Winkel (gemessen zur Flächennormalen der Reflexionsfläche) auf die Reflexionsfläche 42 treffen und in Richtung der Empfangsanordnung 30 umgelenkt werden. Die Reflexionsfläche 42 kann beispielsweise durch eine Siliziumschicht gebildet werden, welche einen Brewster-Winkel von ca. 75° aufweist. Der Winkel zwischen der Reflexionsfläche 42 und dem einfallenden bzw. ausfallenden Empfangslichtpfad 32 beträgt insofern ca. 15°, so dass insgesamt eine Umlenkung des Empfangslichtpfads 32 um ca. 30° erfolgt. Die Reflexionsfläche 42 weist eine bestimmte Schichtdicke auf, welche so gewählt ist, dass das der nicht reflektierte Anteil des Empfangslichtes dort zum Großteil absorbiert wird. Im Fall einer Reflexionsfläche 42 aus Silizium sollte die Schichtdicke demnach größer sein als die maximale Eindringtiefe von 30 µm für das nicht reflektierte Licht. Aufgrund der geringen Umlenkung des Empfangslichtes bei der Reflexion an der Reflexionsfläche 42 können der Lichtempfänger der Empfangsanordnung 30 und die Lichtquelle der Sendeanordnung 20 auch platzsparend auf einer gemeinsamen Leiterkarte angeordnet werden.

Die rotatorische Ausrichtung der jeweiligen polarisationsbeeinflussenden Komponenten des optoelektronischen Sensors 100, bezogen auf den Sende- bzw. Empfangslichtpfad 22, 32 als jeweilige Rotationsachse, wird derart gewählt, dass diejenigen Anteile des Empfangslichts, die auf eine spiegelnde Reflexion an stark glänzenden oder metallischen Objektoberflächen zurückzuführen sind, parallel zur Einfallsebene der Reflexionsfläche 42 (entspricht der Zeichnungsebene) polarisiert sind und daher in der Reflexionsfläche 42 absorbiert werden. Die senkrecht zur Einfallsebene polarisierten Lichtanteile werden an der Reflexionsfläche 42 reflektiert und von der Empfangsanordnung 30 erfasst.

Fig. 2 zeigt einen optoelektronischen Sensor 200 gemäß einem zweiten Ausführungsbeispiel, welcher in vielen Merkmalen mit dem optoelektronischen Sensor 100 von Fig. 1 übereinstimmt. Deshalb werden nachfolgend nur die wesentlichen Unterschiedsmerkmale erläutert.

Das Umlenkelement 40 umfasst drei bevorzugt aus Silizium hergestellte Reflexionsflächen 42a, 42b, 42c, welche benachbart zueinander angeordnet sind und um unterschiedliche Winkel gegenüber dem im Überwachungsbereich 12 verlaufenden Empfangslichtpfad 32 (vor dessen Eintritt in den optoelektronischen Sensor 200) geneigt sind. Die Ausrichtung der Reflexionsflächen 42a bis 42c erfolgt derart, dass der Empfangslichtpfad 32 jeweils im Brewster-Winkel auf eine jeweilige Reflexionsfläche 42a bis 42c auftrifft und um 30° umgelenkt wird. Die nacheinander an den Reflexionsflächen 42a bis 42c erfolgenden Umlenkungen addieren sich zu einem Gesamtwinkel von 90°. Dementsprechend ist die Empfangsanordnung 30 gegenüber der Darstellung in Fig. 1 um 90° im Uhrzeigersinn gedreht, wobei der Empfangslichtpad 32 senkrecht auf den Lichtempfänger auftrifft.

Fig. 3 zeigt einen optoelektronischen Sensor 300 gemäß einem dritten Ausführungsbeispiel. Da auch der optoelektronische Sensor 300 in vielen Merkmalen mit den optoelektronischen Sensoren 100, 200 von Fig. 1 und 2 übereinstimmt, werden nachfolgend ebenfalls nur die wesentlichen Unterschiedsmerkmale erläutert.

Im Unterschied zu den Ausführungsbeispielen von Fig. 1 und 2, bei denen das Umlenkelement 40 feststehend ist, kann das Umlenkelement 40 beim Ausführungsbeispiel von Fig. 3 um eine Achse A rotiert werden. Das Umlenkelement 40 weist zusätzlich eine Spiegelfläche 46 auf, welche zum Sendelichtpfad 22 um 45° geneigt ist, so dass auch der Sendelichtpfad 22 um einen Winkel von 90° umgelenkt wird. Somit kann der optoelektronische Sensor 300 als (Laser-)Scanner eingesetzt werden. Das Umlenkelement 40 kann wie hier dargestellt zum Beispiel durch ein entsprechend ausgestaltetes Prisma gebildet sein.

In der Darstellung von Fig. 3 sind die Positionen von Sendeanordnung 20 und Empfangsanordnung 30 schematisch dargestellt, wobei aus Gründen der Übersichtlichkeit ein Versatz von der Achse A vorgesehen ist. Die Sendeanordnung 20 und die Empfangsanordnung 30 sind benachbart zueinander angeordnet. Diese (auch bei den nachfolgend beschriebenen Ausführungsbeispielen von Fig. 4 und 5) sind so angeordnet, dass der Sendelichtpfad 22 und der Empfangslichtpfad 32 im Bereich zwischen dem Umlenkelement 40 und der Sendeanordnung 20 bzw. der Empfangsanordnung 30 auf der Achse A verlaufen bzw. der Umlenkpunkt des Sendelichtpfad 22 im Schnittpunkt der Spiegelfläche 46 mit der Achse A liegt. Hierfür kann die Neigung der Spiegelfläche 46 entsprechend angepasst werden. Alternativ kann auch vorgesehen sein, dass sich die Anordnung bestehend aus Sendeanordnung 20 und Empfangsanordnung 30 zusammen mit dem Umlenkelement 40 mit um die Achse A dreht.

Fig. 4 zeigt einen optoelektronischen Sensor 400 gemäß einem vierten Ausführungsbeispiel, der ähnlich aufgebaut ist wie der optoelektronische Sensor 300 des dritten Ausführungsbeispiels (Fig. 3).

Beim optoelektronischen Sensor 400 ist im Unterschied zum optoelektronischen Sensor 300 die Sendeanordnung 20 bezogen auf das Umlenkelement 40 auf einer der Empfangsanordnung 30 gegenüberliegenden Seite angeordnet.

Fig. 5 zeigt einen optoelektronischen Sensor 500 gemäß einem fünften Ausführungsbeispiel, der wiederum einige Merkmale des dritten Ausführungsbeispiels (Fig. 3) und des vierten Ausführungsbeispiels (Fig. 4) aufweist.

Im Unterschied zum dritten und vierten Ausführungsbeispiel ist beim optoelektronischen Sensor 500 die Sendeanordnung 20 in das rotierende Umlenkelement 40 integriert und rotiert somit zusammen mit dem Umlenkelement 40 um die Achse A.

Beim dritten bis fünften Ausführungsbeispiel (Fig. 3 bis Fig. 5) ist keine Verzögerungsplatte dargestellt. Bei den optoelektronischen Sensoren 300 bis 500 wird demnach im Unterschied zu den optoelektronischen Sensoren 100, 200, bei denen zirkular polarisiertes Licht auf ein zu erfassendes Objekt auftrifft, linear polarisiertes Licht in den Überwachungsbereich 12 emittiert. Alternativ können jedoch auch bei den optoelektronischen Sensoren 300 bis 500 Verzögerungsplatten vorgesehen sein.

Beim dritten bis fünften Ausführungsbeispiel (Fig. 3 bis Fig. 5) kann zudem vorgesehen sein, dass sich die Anordnung bestehend aus Sendeanordnung 20 und Empfangsanordnung 30 zusammen mit dem Umlenkelement 40 mit um die Achse A dreht.

Bei allen Ausführungsbeispielen kann die Reflexionsfläche 42 bzw. eine der Reflexionsflächen 42a bis 42c eine Öffnung aufweisen, durch welche die Sendelichtsignale in Richtung des Überwachungsbereichs 12 durchtreten können, um die Koaxialität von Sendelichtpfad 22 und Empfangslichtpfad 32 zu ermöglichen.

Aus dem Diagramm von Fig. 6 folgt, dass eine Ausrichtung der Reflexionsflächen 42, 42a bis 42c derart, dass der Empfangslichtpfad 32 jeweils exakt im Brewster-Winkel auf eine jeweilige Reflexionsfläche 42, 42a bis 42c auftrifft, im Hinblick auf eine Unterdrückung von Glanzreflexionen mit einem maximalen Unterdrückungsfaktor (46 für Silizium) zwar ideal ist, geringfügige Abweichungen des Einfallswinkels vom Brewster-Winkel um einige Grad den Unterdrückungsfaktor nicht wesentlich verschlechtern.

Gemäß einer nicht dargestellten Abwandlung können auch zwei oder mehr Umlenkelemente im Empfangslichtpfad vorgesehen sein. Beispielsweise kann eine Umlenkelementanordnung mit mehreren Reflexionsflächen auch dadurch verwirklicht werden, dass beim Ausführungsbeispiel von Fig. 1 im Empfangslichtpfad 32 zwischen dem Umlenkelement 40 und der Empfangsanordnung 30 ein weiteres Umlenkelement mit einer oder mehreren Reflexionsflächen angeordnet wird. Die Ausrichtung der Reflexionsflächen kann derart gewählt werden, dass neben der gewünschten Polarisierung des Empfangslichts im Unterschied zum Ausführungsbeispiel von Fig. 1 ein senkrechter Lichteintritt in die Empfangsanordnung gewährleistet ist.

### Bezugszeichenliste

- 100 - 500: optoelektronischer Sensor
- 12: Überwachungsbereich
- 20: Sendeanordnung
- 22: Sendelichtpfad
- 30: Empfangsanordnung
- 32: Empfangslichtpfad
- 40: Umlenkelement
- 42, 42a - 42c: Reflexionsfläche
- 44: Verzögerungsplatte
- 46: Spiegelfläche

- A: Achse
- Rₛ, Rₚ: Reflexionskoeffizient

## Patentansprüche

1. Optoelektronischer Sensor (100 - 500) zum Erfassen von Objekten in einem Überwachungsbereich (12),
mit einer Sendeanordnung (20) zum Aussenden von Sendelichtsignalen entlang eines Sendelichtpfads (22) in den Überwachungsbereich (12) und mit einer Empfangsanordnung (30), umfassend einen Lichtempfänger, welcher zum Detektieren von Empfangslichtsignalen eingerichtet ist, die von einem im Überwachungsbereich (12) anwesenden Objekt durch Remission auftreffender Sendelichtsignale erzeugt werden und sich zwischen dem Objekt und dem Lichtempfänger entlang eines Empfangslichtpfads (32) ausbreiten,
**dadurch gekennzeichnet,**
**dass** die Empfangsanordnung (30) zumindest ein dem Lichtempfänger vorgeordnetes Umlenkelement (40) mit zumindest einer Reflexionsfläche (42a - 42c) aufweist, welche derart ausgestaltet und ausgerichtet ist, dass der Empfangslichtpfad (32) durch Reflexion der Empfangslichtsignale an der zumindest einen Reflexionsfläche (42a - 42c) umgelenkt wird, wobei die Empfangslichtsignale bei der Reflexion zumindest teilweise polarisiert werden.

2. Optoelektronischer Sensor (100 - 500) nach Anspruch 1,
**dadurch gekennzeichnet,**
**dass** das Umlenkelement (40) derart ausgestaltet und ausgerichtet ist, dass der Einfallswinkel des Empfangslichtpfads (32) auf die zumindest eine Reflexionsfläche (42a - 42c) zumindest im Wesentlichen gleich dem Brewster-Winkel der Reflexionsfläche (42a - 42c) ist.

3. Optoelektronischer Sensor (100 - 500) nach Anspruch 1 oder 2,
**dadurch gekennzeichnet,**
**dass** die Sendelichtsignale linear oder zirkular polarisiert sind.

4. Optoelektronischer Sensor (100 - 500) nach Anspruch 3,
**dadurch gekennzeichnet,**
**dass** die Polarisationsrichtung der Sendelichtsignale und eine Einfallsebene der Empfangslichtsignale auf der zumindest einen Reflexionsfläche (42a - 42c) derart zueinander ausgerichtet sind, dass diejenigen Anteile der Empfangslichtsignale, die auf eine spiegelnde Reflexion der Sendelichtsignale an einem Objekt zurückgehen, zumindest zu einem Großteil an der zumindest einen Reflexionsfläche (42a - 42c) nicht reflektiert werden und bevorzugt von der zumindest einen Reflexionsfläche (42a - 42c) absorbiert

5. Optoelektronischer Sensor (100 - 500) nach Anspruch 3 oder 4,
**dadurch gekennzeichnet,**
**dass** zumindest in dem Empfangslichtpfad (32), bevorzugt zusätzlich im Sendelichtpfad (22), eine Verzögerungsplatte (44), bevorzugt eine λ/4-Platte, vorgesehen ist.

6. Optoelektronischer Sensor (100 - 500) nach einem der vorhergehenden Ansprüche,
**dadurch gekennzeichnet,**
**dass** die zumindest eine Reflexionsfläche (42a - 42c) aus Silizium, bevorzugt aus kristallinem Silizium, besonders bevorzugt aus einem Siliziumwafer hergestellt ist.

7. Optoelektronischer Sensor (100 - 500) nach einem der vorhergehenden Ansprüche,
**dadurch gekennzeichnet,**
**dass** die zumindest eine Reflexionsfläche (42a - 42c) einen Brechungsindex aufweist, welcher um mindestens das 1,5-fache, bevorzugt um mindestens das 2-fache größer ist als der Brechungsindex des an die Reflexionsfläche (42a - 42c) angrenzenden Mediums.

8. Optoelektronischer Sensor (100 - 500) nach einem der vorhergehenden Ansprüche,
**dadurch gekennzeichnet,**
**dass** das Umlenkelement (40) wenigstens zwei, bevorzugt drei Reflexionsflächen (42a - 42c) aufweist, wobei der Empfangslichtpfad (32) nacheinander an den zumindest zwei Reflexionsflächen (42a - 42c) umgelenkt wird.

9. Optoelektronischer Sensor (100 - 500) nach Anspruch 8,
**dadurch gekennzeichnet,**
**dass** die Reflexionsflächen (42a - 42c) derart im Empfangslichtpfad (32) angeordnet sind, dass der Empfangslichtpfad (32) um einen Winkel von 90° umgelenkt wird, wobei bevorzugt die zumindest zwei Reflexionsflächen (42a - 42c) derart ausgerichtet sind, dass die Einfallswinkel für alle Reflexionsflächen (42a - 42c) gleich sind.

10. Optoelektronischer Sensor (100 - 500) nach einem der vorhergehenden Ansprüche,
**dadurch gekennzeichnet,**
**dass** der Sendelichtpfad (22) und der Empfangslichtpfad (32) zumindest im Überwachungsbereich (12) koaxial zueinander verlaufen.

11. Optoelektronischer Sensor (100 - 500) nach einem der vorhergehenden Ansprüche,
**dadurch gekennzeichnet,**
**dass** in der zumindest einen Reflexionsfläche (42a - 42c) eine Öffnung vorgesehen ist, durch welche der Sendelichtpfad (22) hindurch verläuft.

12. Optoelektronischer Sensor (100 - 500) nach einem der vorhergehenden Ansprüche,
**dadurch gekennzeichnet,**
**dass** der Sensor (100 - 500) als entfernungsmessender Sensor ausgebildet ist und dazu eingerichtet ist, die Entfernung eines erfassten Objekts von dem Sensor (100 - 500) bevorzugt gemäß dem Triangulationsprinzip und/oder in Abhängigkeit von der Lichtlaufzeit der ausgesendeten und empfangenen Lichtsignale zu ermitteln.
